Europäisches Patentamt

European Patent Office

Office européen des brevets

(11) Publication number: **0 091 504**
**B1**

(12) **EUROPEAN PATENT SPECIFICATION**

(45) Date of publication of patent specification: **29.01.86**

(21) Application number: **82103142.4**

(22) Date of filing: **14.04.82**

(51) Int. Cl.⁴: **C 02 F 1/46**

(54) **Removal of dyestuffs from water by electroflotation process.**

(43) Date of publication of application:
**19.10.83 Bulletin 83/42**

(45) Publication of the grant of the patent:
**29.01.86 Bulletin 86/05**

(84) Designated Contracting States:
**BE DE FR GB IT NL**

(56) References cited:
**FR-A-2 134 035**
**FR-A-2 248 238**

**CHEMICAL ABSTRACTS, vol. 94, no. 2, 12th January 1981, page 218, no. 7426j, Columbus Ohio (USA); YANG, SU-CHENG: "Electrolytic floatation manganese salt filtration method for treating wool dyeing wastewater".**
**CHEMICAL ABSTRACTS, vol. 83, no. 24, 15th December 1975, page 278, no. 197607w, Columbus Ohio (USA);**
**MEMENTO TECHNIQUE DE L'EAU, 1972, page 325, Paris (FR).**

(73) Proprietor: **MORTON THIOKOL, INC.**
**110 North Wacker Drive**
**Chicago, Illinois 60606 (US)**

(72) Inventor: **Van Hertum, Willem A.**
**Retranchement 28**
**Gorinchem (NL)**
Inventor: **Voepel, Loui P.**
**Vivaldiweg 31**
**Bunschoten (NL)**

(74) Representative: **Baillie, Iain Cameron et al**
**c/o Ladas & Parry Isartorplatz 5**
**D-8000 München 2 (DE)**

Courier Press, Leamington Spa, England.

# 0 091 504

**Description**

The invention is generally concerned with the decolorization of colored water, and more specifically, it is concerned with the decolorization of colored waste water containing dissolved sulphonated azo dyes by an electrochemical-flotation process.

It has become increasingly important in recent years that water effluents from industrial processes, particularly waste water from chemical operations, be freed of environmentally unacceptable contaminants before being discharged into local sewer systems or rivers and lakes. This need has been the incentive for numerous investigations into methods of removing specific contaminants from waste water.

Many prior art patents relate to the purification of various effluents and waste water by electrolytic procedures.

U.S. Patent 4,163,716 discloses a process for purifying an aqueous acidic effluent from a dye house by a two-step flocculation process comprising the steps of (1) passing the effluent thru an ion exchange resin, (2) passing the treated effluent to an electrolysis bath containing an iron cathode wherein ferrous and ferric hydroxide are formed which are removed from the effluent together with the colored substances. The remaining liquid is recycled to the dye house. The pH of the effluent is adjusted at various stages of the process to 6—7 and also to 7—9.

U.S. Patent 4,011,150 also discloses a discontinuous two-step electrolytic flocculation procedure wherein an iron anode and a carbon cathode are employed in the first step followed by filtration, and a carbon anode and an aluminum cathode are employed in the second step where the filtrate from the first step is adjusted to a pH of 4 by addition of acid.

U.S. Patent 3,915,820 discloses a two-step electrolytic flocculation process of purifying waste water. The first step carries out the electrolysis at a pH lower than 7 by dipping an iron anode and an aluminum cathode into the waste water and applying a direct voltage to the electrodes. The electrolysis is then stopped, and the second step comprises electrolysis of the waste water at a pH higher than 7 by dipping an iron anode and a carbon cathode in the waste water and applying a direct current voltage.

U.S. Patent 4,012,319 relates to the removal of suspended particles such as fats, mineral oils, proteins and fibers from waste water by passing the water over a plurality of electrode banks, utilizing gradient current density zones to create micro bubbles which float the particles to the surface for removal.

U.S. Patent 4,179,347 teaches a continuous process for disinfecting waste water and removing suspended solids therefrom by the addition of an electrolyte such as sodium chloride and electrolysis between a series of electrically charged electrode plates to generate a foam which entrains solids. Chlorine is produced, which disinfects the water.

U.S. Patent 4,194,972 relates to a method for breaking an oil-in-water emulsion by an electrolytic procedure.

U.S. Patents 3,975,269, 4,219,417 and 4,214,987 relate to methods which, basically, are not electrochemical, but depend on various flocculants and coagulants to remove suspended solids, contaminants and pollutants from waste water, and to achieve disinfection thereof.

Japanese Patent 51—21346 relates to the decolorization and purification of pulp waste water by an electrolytic-oxidation process under acidic conditions (low pH) using a $PbO_2$ anode.

Japanese Patent 50—4857 proposes removing pigments from colored waste water by a batch flocculation process with the use of activated clay and electrolysis employing aluminum electrodes.

French patent application 2248 238 describes a process for treating waste water in which the waste is electrolysed in the presence of iron waste to introduce ferrous ions, the ferrous ion is oxidated to ferric ion by hydrogen peroxide and air, and the dye is flocculated at a pH of 5 to 6 if it is anionic.

However, none of said prior art patents discloses a simplified electrochemical method utilizing iron electrodes at a specific pH range and current density for the removal of dissolved sulphonated azo dyestuffs from waste water without the use of flocculants, coagulants or various additives, or stepwise procedures:

It would, therefore, be desirable, and is the object of this invention, to provide a simple electrochemical process for the removal of dissolved sulphonated azo dyestuffs from waste water containing same by a method which does not require the addition of flocculants, coagulants or electrolytes.

In accordance with the invention there is provided an electroflotation process for removing at least 85 to 90% by weight of dissolved sulphonated azo dyestuffs from water containing same, in which the water is fed to an electrolytic cell containing a pair of closely spaced iron electrodes, supplying an electrolyzing quantity of an electric current to said electrodes of from 100 to 500 amperes per square meter of electrode surface, removing from the surface of said water the dark, flocculant, insoluble mass formed during said process, and discharging the substantially dye-depleted water from said cell characterized by the fact the pH of the water is adjusted to a value from 8 to 10.

The present process may be operated continuously or as a batch process, as is desired. When operated as a continuous process, there is continuous feeding of waste water to the electrolytic cell and continuous removal therefrom of the dark, insoluble flocculant mass formed during electrolysis.

An important feature of the present invention is the use of an iron cathode and an iron anode to achieve the desired decolorization. As is demonstrated in the Examples hereinafter described, electrodes

2

consisting of materials such as the following are not suitable in the process of the present invention for the indicated reasons:

| Cathode | Anode | Defect |
|---|---|---|
| Stainless steel | Nickel alloy | Excessive increase of heavy metals in the treated effluent. |
| Stainless steel | Titanium (lead dioxide coated) | Inadequate color removal and rapid anode deterioration. |
| Stainless steel | Carbon | Virtually no color removal. |
| Carbon | Stainless steel | Inadequate color removal. |
| Iron | Stainless steel | Inadequate color removal and rapid anode deterioration. |
| Stainless steel | Aluminum | Inadequate color removal. |

The iron electrodes of the present invention, when used in conjunction with the present electrolytic method carried out at a specific pH range and current density, facilitate the removal of at least about 85—90% by weight of the dissolved sulphonated azo dyestuffs without contributing an excessive quantity of environmentally impermissible heavy metals to the waste water, and without an unacceptably rapid deterioration of the iron anode.

During electrolysis, the dissolved sulphonated azo dyestuff is decomposed at the anode, either directly by the electric current or by the nascent oxygen formed at the anode, to form a water-insoluble decomposition product. This decomposition product combined with the iron ions or iron hydroxide formed at the anode to form an insoluble complex which is carried to the surface of the waste water by the rising bubbles of oxygen gas formed at the anode and by the hydrogen gas formed at the cathode. The floating insoluble mass is removed by any convenient means leaving the decolorized waste water for discharge into a local sewer system, or further processing.

The iron anode, which is conveniently in a grid or grate configuration, gradually dissolves during the course of the electrolysis; however, the cathode remains intact. In the present process, the dissolution of the iron anode is slow enough to permit the decolorization of an acceptably large volume of waste water before it becomes necessary to replace the anode.

The pH of the waste water is adjusted prior to electrolysis to a value in the range of 8 to 10. Inasmuch as the waste water usually has a pH less than about 6.5, the addition of an alkaline agent is required, usually sodium hydroxide. Although the process is operable at a pH value greater than 10, it is not necessary to exceed this value when a lesser alkalinity will suffice.

As is described in the Examples hereinafter set forth, the present electroflotation process was carried out by the use of iron electrodes in the form of a grid, i.e., a network of uniformly spaced horizontal and perpendicular strips. The electrodes measured 14 cm. in length and 9 cm. in width, with a thickness of about 1 mm., wherein the open area was about 30% of the total grid area and each opening measured about 10 mm. by 4.4 mm. The electrode area for this particular configuration was approximately 88 cm.$^2$ (14 cm.×9 cm.×0.7), or about 13.7 in.$^2$.

A supply of an electric current of from about 1 to about 4 amperes to this type of electrode system was effective to achieve the desired waste water decolorization at the stated pH range. The current density for said electric current supply approximates from about 122 to about 488 amperes per square meter of electrode surface, or from about 10 to about 42 amperes per square foot of electrode surface.

It is, of course, possible to vary the configuration of the iron electrodes and their dimensions to accommodate larger or smaller volumes of waste water than were treated by the particular apparatus employed herein to achieve the requisite decolorization, provided the current densities and pH limitations are observed.

During the present electroflotation process, it is believed that several chemical and physical processes occur at the same time:

coagulation and flocculation of suspended and dissolved materials, brought about by metal (iron) ions, dissolving at the anode;

formation of insoluble compounds by reactions of these metal ions with dissolved chemicals;

adsorption of suspended, insoluble dye decomposition products and dissolved materials to metal hydroxide-flocs, formed at the anode;

oxidation processes at the anode through direct electrode-reactions, or through oxidizing agents like atomic oxygen or chlorine, formed in situ; and reduction processes at the cathode.

The gas bubbles generated by electrolysis of the water are entrapped within the flocs. These flocs rise to the surface where they float and are skimmed off.

As is evident from the foregoing description of the process of this invention, the addition of flocculating agents, electrolytes, coagulants, or other agents is not required to achieve the desired removal of the sulphonated azo dyestuffs from the waste water.

For a more complete understanding of the present invention, reference is now made to the following specific examples illustrating the present electroflotation process.

Comparative Example 1

Two closely spaced parallel electrodes in grid form, consisting of a stainless steel cathode and a nickel alloy anode, measuring 14 cm. in length and 9 cm. in width, where horizontally mounted at the bottom of a transparent plastic tank, measuring 25 cm. in height, 16 cm. in length, and 11 cm. in width to provide an electrolytic cell. As previously indicated, the open area of these grids was about 30%. To this tank (cell) there were added 2.5 liters of waste water having a pH of 7.42 and containing dissolved yellow, orange and red-colored azo dyes, which comprised the effluent of a dye manufacturing operation.

The dye concentration of the waste water was determined spectrophotometrically by measuring the absorption at the maximal wave length, in this case 500 nanometers (nm). The electrolysis of this waste water was commenced by supplying a direct current of one ampere for 0.25 hour at an electromotive force (potential) of about 1.9 volts. The current density was 122 amperes per square meter (10.5 amperes per square foot) of electrode surface.

During electrolysis, gases were formed at the electrodes producing bubbles which transported the insoluble decomposition products to the surface of the waste water to form a floating foam. Periodically, the foam was removed from the surface.

At the end of 0.25 hour, the residual color of the waste water was again determined spectrophotometrically and was found to be 97.5% of the original concentration.

The electrolysis was continued for an additional 1 3/4 hours for a total of 2 hours at the same current density with the voltage varying from 1.8 to 2.0 volts, except that the pH was increased through the electrolysis of the waste water and the residual color of the waste water was determined spectrophotometrically at 0.25 hour intervals. The results are set forth in Table I.

TABLE I
Current—1 ampere

| Time (h) | Residual color (%) | pH |
|----------|--------------------|------|
| 0.25 | 97.5 | 7.42 |
| 0.50 | 97.2 | 8.26 |
| 0.75 | 49.1 | 8.50 |
| 1.00 | 22.7 | 8.71 |
| 1.25 | 10.3 | 8.89 |
| 1.50 | 7.5 | 9.06 |
| 1.75 | 6.1 | 9.22 |
| 2.00 | 5.0 | 9.44 |

Comparative Example 2

To corroborate the results obtained in Comparative Example 1, the procedure of Comparative Example 1 was repeated on a second 2.5 liters batch of waste water from the same source, except that the pH values were slightly different from those of Comparative Example 1. The results are as set forth in Table 2.

4

**0 091 504**

TABLE 2
Current—1 ampere

| Time (h) | Residual color (%) | pH |
|---|---|---|
| 0.25 | 100.0 | 7.88 |
| 0.50 | 75.2 | 8.29 |
| 0.75 | — | — |
| 1.00 | 15.3 | 8.64 |
| 1.25 | 8.6 | 8.86 |
| 1.50 | 9.3 | 9.12 |
| 1.75 | 7.6 | 9.27 |
| 2.00 | 7.6 | 9.39 |

Comparative Example 3

The procedure of Comparative Example 1 was repeated on another 2.5 liters sample of waste water from the same source, except that the current was maintained at 2 amperes throughout for a current density of 244 amperes per square meter (21 amperes/ft.$^2$—with a voltage varying from 2.1 to 2.3 volts). The residual color of the waste water was determined after 0.5 hour, the pH values were slightly different from those of Comparative Example 1, and the electrolysis was continued for only 1.0 hour. The results are set forth in Table 3.

TABLE 3
Current—2 amperes

| Time (h) | Residual color (%) | pH |
|---|---|---|
| 0.50 | 29.8 | 8.50 |
| 0.75 | 8.1 | 9.03 |
| 1.00 | 6.7 | 9.33 |

Comparative Example 4

The procedure of Comparative Example 3 was repeated on another 2.5 liters sample of waste water from the same source, except that the residual color was determined after 0.25 hour, the pH values were slightly different from those of Comparative Example 3 and the electrolysis was continued for 1.50 hours. The results are set forth in Table 4.

TABLE 4
Current—2 amperes

| Time (h) | Residual color (%) | pH |
|---|---|---|
| 0.25 | 103.7* | 7.85 |
| 0.50 | 74.1 | 8.57 |
| 0.75 | 26.1 | 8.83 |
| 1.00 | 9.6 | 9.14 |
| 1.25 | · 8.0 | 9.52 |
| 1.50 | 5.2 | 9.94 |

*Turbidity causes a reading in excess of 100%.

Comparative Example 5

The procedure of Example 1 was repeated on another 2.5 liters of waste water from the same source, except that the current was maintained at 3 amperes (current density 366 amps./m² or 32 amps./ft.²—with a voltage of 2.3 to 2.5 volts), the residual color of the waste water was determined after 0.25 hour, the pH values were slightly different from those of Comparative Example 1 and the electrolysis was continued for only 1.0 hour. The results are set forth in Table 5.

TABLE 5
Current—3 amperes

| Time (h) | Residual color (%) | pH |
|---|---|---|
| 0.25 | 96.6 | 8.55 |
| 0.50 | 16.1 | 9.04 |
| 0.75 | 7.2 | 9.56 |
| 1.00 | 3.3 | 10.25 |

Comparative Example 6

The waste water was analyzed before and after the electroflotation procedures described in Comparative Examples 1—5 for chloride, lead, iron, copper, chromium and zinc contents. The change in the concentrations of these constituents are set forth in Table 6.

TABLE 6

| Constituents | Concentration (milligrams/liter) | |
|---|---|---|
| | Before | After |
| Lead | 0.01 | 0.05 |
| Iron | 2.04 | 0.63 |
| Copper | 0.02 | 0.04 |
| Chromium | 0.01 | 0.17 |
| Zinc | 1.79 | 0.04 |
| | Concentration (gram/liter) | |
| Chloride | 11.33 | 11.25 |

As is demonstrated by Comparative Examples 1—5, an electroflotation process, when carried out using a stainless steel cathode and a nickel alloy and at the indicated pH and current densities, effectively reduces the dye content of the waste water by at least 90% of the original concentration.

However, as is illustrated by the results of Comparative Example 6, when using a nickel alloy anode in conjunction with a stainless steel cathode, after the electroflotation process has removed the coloration, the lead, copper and chromium contents of the dye-depleted waste water are increased five fold, two fold and seventeen fold respectively, an environmentally unacceptable increase.

The foregoing metal contents were determined by atomic absorption spectrometry. Since the spectrophotometer used was not equipped with a hollow cathode lamp for nickel analyses, the respective concentrations of this metal were not determined. However, there is no reason to believe that the concentration of nickel would not also be increased in the dye-depleted waste water, as were the concentrations of lead, copper and chromium.

Comparative Example 7

Waste water from the same source as that used in Comparative Example 1 was employed in a continuous electroflotation process in which the waste water was pumped into the same tank (cell) as that described in Comparative Example 1 and containing the same types of electrodes. The waste water (2.78 liters) was pumped into the tank and the electrolysis was begun by supplying a direct current of 3 amperes to the stationary water.

After one hour, sodium hydroxide was added to the waste water to attain a pH of 10.09, and the pump was started to feed the waste water continuously to the tank through a glass tube inlet dipping into one end

**0 091 504**

of the tank. The floating foam generated by the electrolysis was skimmed off the surface of the waste water from time to time, and decolorized waste water was removed continuously through an outlet situated at the opposite end of the tank. The residual color of the waste water, voltage and pH were determined at 1 hour intervals. The test ended after 4.67 hours when the electrodes were deteriorated and 13.26 liters of waste water have been decolorized. The results are tabulated in Table 7.

TABLE 7

| Time (h) | Electric potential (volts) | Residual color (%) | pH |
|---|---|---|---|
| Before | | 100 | 6.98 |
| Start pump | 2.50 | 3.7 | 10.09 |
| 1 | 2.52 | 4.3 | 9.70 |
| 2 | 2.57 | 6.3 | 9.26 |
| 3 | 2.67 | 5.6 | 9.21 |
| 4 | 2.88 | 5.7 | 9.19 |
| 4.67 | * | 4.8 | 9.17 |
| Average | 2.63 | 5.1 | 9.44 |

*At this point, the voltage increased dramatically because of electrode breakdown.

Comparative Example 8

The continuous electroflotation process of Comparative Example 7 was repeated, except that the electrodes consisted of a stainless steel cathode and a titanium anode with a lead dioxide coating thereon. The waste water (2.78 liters) was pumped into the tank, the water was made alkaline with NaOH, and the electrolysis was begun by supplying a direct current of 3 amperes to the stationary water for 60 minutes and then starting the feed pump. Thereafter, determinations were made every 10 minutes for pH, residual color, voltage and flow rate (liters/hr.). The results are tabulated in Table 8.

TABLE 8

| Time[a] (min.) | pH | Residual color[b] (%) | Voltage (V) | Waste water flow (l/hr) |
|---|---|---|---|---|
| 10[c] | 11.53 | — | 2.58 | — |
| 20 | 11.48 | 6.6 | 2.41 | 1.50 |
| 30 | 11.32 | 8.4 | 2.42 | 3.60 |
| 40 | — | 9.0 | 2.41 | 1.59 |
| 50 | 11.11 | 10.3 | 2.47 | 3.84 |
| 60 | 11.04 | 11.3 | 2.43 | 1.41 |
| 70 | 11.02 | 11.3 | 2.46 | 3.72 |
| 80[d] | 11.01 | 11.0 | 2.37 | 1.98 |
| Av. | 11.22 | 9.7 | 2.44 | 2.52 |

[a]The test was commenced by treating 2.78 l of waste water, stationary for 60 min., and then starting the feed pump; the time indicated is the pumping time.
[b]The color was determined as absorption at 455 nm.
[c]The anode showed signs of deterioration.
[d]The anode had virtually dissolved.

7

Comparative Example 9

The continuous electroflotation procedure of Comparative Example 8 was repeated, except that the electrodes consisted of a stainless steel (American Iron and Steel Institute—AISI No. 430) cathode and a carbon anode. The process was discontinued after 60 minutes after the initial stationary period of 60 minutes for the reason that no appreciable decolorization had taken place. The results are set forth in Table 9.

TABLE 9

| Time[a] (min.) | pH | Residual color[b] (%) | Voltage (V) | Waste water flow (l/h) |
|---|---|---|---|---|
| 0 | 9.53 | 91.1 | 4.47 | |
| 10 | 9.56 | — | 4.34 | — |
| 20 | 9.44 | 95.5 | 4.37 | 1.74 |
| 30 | 9.38 | 98.9 | 4.32 | 1.44 |
| 40 | 9.41 | 97.8 | 4.32 | 3.30 |
| 50 | 9.38 | 93.1 | 4.46 | 3.00 |
| 60[c] | 9.34 | 90.2 | 4.49 | 2.88 |
| Av. | 9.43 | 94.4 | 4.40 | 2.47 |

[a]The test was commenced by treating 2.78 l of waste water, stationary for 60 min., and then starting the feed pump; the time indicated is the pumping time.
[b]The color was determined as absorption at 440 nm.
[c]Both electrodes were still in good condition.

Comparative Example 10

The procedure of Comparative Example 8 was repeated, except that the electrodes consisted of a carbon cathode and stainless steel anode (AISI 430). The process was discontinued after 60 minutes after the initial stationary period of 60 minutes for the reasons that no significant decolorization had taken place and deterioration of the anode had begun.

The results are tabulated in Table 10.

TABLE 10

| Time[a] (min.) | pH | Residual color[b] (%) | Voltage (V) | Waste water flow (l/h) |
|---|---|---|---|---|
| 0 | 9.27 | 49.8 | 3.70 | |
| 10 | 9.30 | — | 3.79 | — |
| 20 | 9.33 | 53.3 | 3.82 | 2.25 |
| 30 | 9.28 | 55.4 | 3.88 | 3.15 |
| 40 | 9.45 | 55.1 | 3.91 | 2.31 |
| 50 | 9.52 | 58.5 | 3.92 | 2.97 |
| 60[c] | 9.49 | 58.7 | 3.92 | 2.64 |
| Av. | 9.38 | 55.1 | 3.85 | 2.66 |

[a]The test was commenced by treating 2.78 l of waste water stationary for 60 min., and then starting the feed pump; the time indicated is the pumping time.
[b]The color was determined as absorption at 440 nm.
[c]Deterioration of the anode had begun.

Comparative Example 11

The procedure of Comparative Example 8 was repeated, except that the electrodes consisted of an iron cathode and a stainless steel anode (AISI 430). The results are as set forth in Table 11.

TABLE 11

| Time[a] (min.) | pH | Residual color[b] (%) | Voltage (V) | Waste water flow (l/h) |
|---|---|---|---|---|
| 0 | 12.11 | 64.0 | 2.33 | |
| 15 | 12.05 | 40.2 | 2.30 | 1.10 |
| 30 | 10.97 | 15.7 | 2.38 | 1.40 |
| 45 | 10.00 | 19.2 | 2.48 | 3.78 |
| 60 | 9.96 | 15.3 | 2.51 | 3.08 |
| 75 | 9.94 | 13.7 | 2.47 | 2.56 |
| 90 | 9.74 | 12.8 | 2.49 | 3.12 |
| 105 | 9.66 | 10.3 | 2.49 | 2.94 |
| 120 | 9.75 | 10.3 | 2.53 | 2.62 |
| 180 | 11.67 | 24.9 | 2.59 | 2.66 |
| 230 | 11.53 | 22.2 | c | 3.49 |
| Av. | 11.00 | 22.5 | 2.50 | 2.83 |

[a]The test was commenced by treating 2.78 l of waste water stationary for 60 min., and then starting the feed pump; the time indicated is the pumping time.
[b]The color was determined as absorption at 485 nm.
[c]At this time the anode broke, but it was not completely dissolved; the weight loss had been 1.0 g/l of waste water (about 62% of the original anode weight).

Example 1

The procedure of Comparative Example 8 was repeated, except that the electrodes consisted of an iron cathode and an iron anode. After current had been supplied to the stationary waste water for 60 minutes, the pump was started and pH, residual color, voltage and flow rate (liters/hr.) values were determined every 30 minutes. The results are tabulated in Table 12.

TABLE 12

| Time[a] (min.) | pH | Residual absorption[b] (%) corrected for turbidity | Voltage (V) | Waste water flow (l/h) |
|---|---|---|---|---|
| 0 | 6.70 | 4.1 | 2.02 | |
| 30 | 6.87 | 7.9 | 2.08 | 2.34 |
| 60 | 9.16 | 4.7 | 2.03 | 3.45 |
| 90 | 9.42 | 4.5 | 1.99 | 3.90 |
| 120 | 9.63 | 4.7 | 1.97 | 3.71 |
| 150 | 9.77 | 5.0 | 2.00 | 3.05 |
| 180 | 9.96 | 5.3 | 1.99 | 1.71 |
| 210 | 9.94 | 4.9 | 1.93 | 1.72 |
| 240 | 9.76 | 6.0 | 2.10 | 3.23 |
| 270 | 9.78 | 5.9 | 2.04 | 2.98 |
| 300 | 9.87 | 6.3 | 1.98 | 2.82 |
| 330 | 10.02 | 8.2 | 2.02 | 2.30 |
| 360 | 9.97 | 8.0 | 2.01 | 2.99 |
| 390 | — | 11.4 | 2.01 | 1.92 |
| 420 | 10.00 | 7.1 | 2.02 | 2.89 |
| 450 | 10.02 | 7.7 | 2.09 | 3.07 |
| 480 | 9.94 | 6.5 | 2.03 | 2.94 |
| 510 | 10.01 | 8.2 | 1.98 | 2.86 |
| 540 | 9.93 | | 2.13 | 2.04 |
| 570 | 9.94 | 10.2 | 2.10 | 2.56 |
| 600 | 9.82 | 8.5 | 2.23 | 2.74 |
| 630 | 9.75 | 7.3 | 2.22 | 3.00 |
| 660 | 9.70 | 8.5 | 2.01 | 3.04 |
| 690 | 9.74 | 6.6 | 2.02 | 2.88 |
| 720 | 9.60 | 1.1 | 2.20 | 2.02 |
| 750 | 9.77 | 3.9 | c | 2.61 |
| Av. | 9.56 | 6.5 | 2.05 | 2.75 |

[a]The test was commenced by treating 2.78 l of waste water, stationary for 60 min., and then starting the feed pump; the time indicated is the pumping time.

[b]The color was determined as absorption at 485 nm. However, the samples taken from the cell were somewhat contaminated with hydroxide flocs. The turbidity caused some scatter of light in the spectrophotometer, amounting to about 4% of the original absorption. The residual absorption values have been corrected accordingly.

[c]At this time the anode had virtually dissolved. The weight loss had been 1.3 g/l of waste water (about 83% of the original anode weight). The cathode was still intact.

Example 2

The procedure of Example 1 was followed except that sulfuric acid was added to the waste water feed at various times during the electroflotation process to lower the pH. Values for pH, residual color, voltage and flow rate (liters/hr.) were determined every ten minutes. The results are tabulated in Table 13.

TABLE 13

| Time[a] (min.) | pH | Residual color[b] (%) | Voltage (V) | Waste water flow, (l/h) |
|---|---|---|---|---|
| 10 | 10.93 | 4.4 | 2.70 | 2.07 |
| 20 | 10.90 | 4.1 | 2.78 | 0.93 |
| 30 | 10.70 | 4.5 | 2.86 | 3.42 |
| 40 | 5.78 | 10.1 | 2.68 | 3.60 |
| 50 | 3.00 | 19.3 | 2.46 | 4.08 |
| 60 | 2.06 | 23.5 | 2.30 | 3.81 |
| 70 | 1.96 | 35.7 | 2.34 | 2.40 |
| 80 | 2.46 | 38.7 | 2.46 | 2.55 |
| 90 | 5.03 | 27.6 | 2.58 | 2.43 |
| 100 | 6.49 | 13.4 | 2.73 | 2.55 |
| 110 | 6.84 | 5.3 | 2.76 | 3.30 |
| 120 | 6.83 | 6.2 | 2.72 | 2.94 |
| 130 | 6.96 | 5.3 | 2.75 | 2.67 |
| 140 | 7.17 | 13.4 | 2.63 | 1.50 |
| 150 | 6.83 | 9.7 | 2.55 | 2.64 |
| 160 | 6.47 | 22.3 | 2.51 | |
| 170 | 4.53 | 18.7 | 2.15 | 2.58 |
| 180 | 1.61 | 28.5 | 1.77 | 2.58 |
| 190 | 1.66 | 37.5 | 2.06 | 3.48 |
| 205 | 2.62 | 35.7 | 2.19 | 2.88 |
| 215 | 5.36 | 26.3 | 2.34 | 3.00 |
| 225 | 6.33 | 28.8 | 2.37 | 3.57 |
| 235 | 6.53 | 9.0 | 2.41 | 2.22 |
| 245 | 9.25 | 6.5 | 2.29 | 2.43 |
| 275 | 9.33 | 11.5 | 1.91 | 2.01 |
| 285 | 2.57 | 21.1 | 1.62 | 2.79 |
| 295 | 1.68 | 31.3 | 1.77 | 2.88 |
| 305 | 2.42 | 70.9 | 1.79 | 3.06 |

11

**0 091 504**

TABLE 13 (contd.)

| Time[a] (min.) | pH | Residual color[b] (%) | Voltage (V) | Waste water flow, (l/h) |
|---|---|---|---|---|
| 325 | 6.76 | 35.1 | 1.95 | 2.79 |
| 335 | 7.20 | 15.7 | 1.92 | 2.88 |
| 345[c] | 9.82 | 9.5 | 1.90 | 2.73 |
| Av | 5.74 | 20.3 | 2.33 | 2.76 |

[a]The test was commenced by treating 2.78 l of waste water stationary for 60 min., and then starting the feed pump; the time indicated is the pumping time.

[b]The color was determined as absorption at 423 nm.

[c]At this time the electrodes were still in good condition; the anode weight loss had been 1.3 g/l of waste water (about 40% of the original anode weight).

The foregoing data of Examples 1 and 2 demonstrate that the present process, using iron electrodes, when carried out at a pH in the range of 8 to 10 is effective to remove at least about 85—90% or more of the dissolved azo dyes from waste water.

Comparative Example 12

The procedure of Comparative Example 8 was repeated, except that the electrodes consisted of a stainless steel (AISI 430) cathode and an aluminum anode, and waste water was pumped into the tank already filled with decolorized water. Determinations were made every 30 minutes of pH, residual color, voltage and flow rate. The test was concluded at the end of 120 minutes because of the deterioration of the anode. The results are set forth in Table 14.

TABLE 14

| Time[a] (min.) | pH | Residual color[b] % | Voltage (V) | Waste water flow (l/h) |
|---|---|---|---|---|
| 30 | 9.37 | 30.9 | 1.92 | 2.93 |
| 60 | 9.35 | 42.1 | 1.95 | 2.46 |
| 90 | 9.36 | 56.2 | 1.97 | 2.71 |
| 120[c] | 9.04 | 64.1 | 1.98 | 2.78 |
| Av. | 9.28 | 48.3 | 1.96 | 2.72 |

[a]The test was started by pumping waste water into the flotation cell filled with already decolorized water; the time indicated is the actual treatment time.

[b]The color was determined as absorption at 485 nm.

[c]The test was ended before the anode had dissolved.

The foregoing Examples demonstrate that the electroflotation process of the present invention using an iron anode and an iron cathode is effective to remove at least about 85—90% or more of the dissolved sulphonated azo dye coloration of waste water without adding excessive quantities of environmentally unacceptable heavy metals such as lead, copper and chromium to the waste water, and without rapid deterioration of the anode.

**Claims**

1. An electroflotation process for removing at least 85 to 90% by weight of dissolved sulphonated azo dyestuffs from water containing same, in which the water is fed to an electrolytic cell containing a pair of closely spaced iron electrodes, supplying an electrolyzing quantity of an electric current to said electrodes of from 100 to 500 amperes per square meter of electrode surface, removing from the surface of said water the dark, flocculant, insoluble mass formed during said process, and discharging the substantially dye-depleted water from said cell characterized by the fact the pH of the water is adjusted to a value of from 8 to 10.

2. A process according to claim 1, characterized by the fact that the electrodes are in grid form.

12

# 0 091 504

**Revendications**

1. Procédé d'électro-flotation pour extraire au moins 85 à 90% en poids de colorant azoïques sulfonés dissous à partir d'eau en contenant, selon lequel on amène l'eau à une cuve d'électrolyse contenant une paire d'électrodes de fer à espacement étroit, on fournit auxdites électrodes une quantité électrolysante d'un courant électrique de 100 à 500 ampères par mètre carré de surface d'électrode, on retire de la surface de ladite eau la masse insoluble, floculante et sombre formée au cours dudit procédé, et on évacue hors de ladite cuve l'eau notablement appauvrie en colorants, caractérisé en ce qu'on ajuste le pH de l'eau à une valeur de 8 à 10.

2. Procédé selon la revendication 1, caractérisé en ce que les électrodes sont en forme de grille.

**Patentansprüche**

1. Elektroflotationsverfahren zum Entfernen von gelösten sulfonierten Azofarbstoffen zu mindestens 85 bis 90 Gew.% aus diese enthaltendem Wasser, in dem das Wasser einer Elektrolysezelle zugeführt wird, die mindestens zwei in geringem Abstand voneinander angeordnete Eisenelektroden enthält, den Elektroden eine elektrolysierend wirkende Menge eines elektrischen Stroms von 100 bis 500 Ampère pro $m^2$ der Elektrodenfläche zugeführt, die während dieses Verfahrens gebildete, dunkle, flockige, unlösliche Masse von der Oberfläche des Wassers entfernt und das an Farbstoff im wesentlichen verarmte Wasser von der Zelle abgezogen wird, dadurch gekennzeichnet, daß das Wasser auf einen pH-Wert im Bereich von 8 bis 10 eingestellt wird.

2. Verfahren nach Anspruch 1, dadurch gekennzeichnet, daß die Elektroden gitterförmig sind.

13